# EUROPEAN PATENT SPECIFICATION

(11) **EP 2 657 284 B1**
(45) Date of publication and mention of the grant of the patent: **29.10.2014**
(21) Application number: 12002994.7
(22) Date of filing: 27.04.2012
(51) Int. Cl.: C08L 23/12, C08J 3/22, C08K 3/00, C08K 5/00, C08K 5/42, C08L 43/04

(54) **Additive masterbatch with a C3-C5 alpha-olefin homo- or copolymer comprised in the carrier**
Zusatz-Vormischung mit einem C3-C5 Alphaolefinhomo- oder Copolymer in dem Träger
Mélange maître additif avec homo- ou copolymère alpha-oléfine C3-C5 compris dans le support

(43) Date of publication of application: 30.10.2013
(73) Proprietor: Borealis AG, 1220 Vienna (AT)
(72) Inventor: Dahlèn Kristian, 44460 Stora Höga (SE); Nylander Perry, 41261 Göteborg (SE); Fagrell Ola, 444 45 Stenungsund (SE)
(74) Representative: Kador & Partner

(56) References cited:
- EP-A1- 2 083 047
- WO-A1-2010/072396
- US-A1- 2006 258 796
- US-A1- 2008 119 605

## Description

Additives, such as pigments, antioxidants, silanol condensation catalysts, etc. are usually not added in their pure form but as so-called masterbatches which contain a polymer (the so-called carrier) wherein the additive is contained in high concentration. This masterbatch is then compounded with the polymer the additives of the masterbatch should be added to.

The cross-linking of polyolefins comprising cross-linkable silicon-containing groups with catalysts is well-known in the art. It is inter alia described in EP 736 065. However, in case further additives, such as antioxidants or pigments, are added to a polyolefin comprising cross-linkable silicon-containing groups this has to be usually carried out prior to cross-linking. It has been found that such additives may impair the cross-linking performance of the silanol condensation catalyst, i.e. longer cross-linking time, harsher cross-linking conditions (such as higher temperature and/or higher humidity) and/or a higher amount of catalyst is required.

Thus, there is the need to prevent or at least reduce the negative effect of additives on the cross-linking performance.

It has been surprisingly found that adding the additive as a masterbatch comprising a C₃-C₅ alpha-olefin homo- or copolymer the cross-linking performance can be improved.

Therefore, the present invention provides a polyethylene composition comprising:
a) a polyethylene having cross-linkable silicon-containing groups (A); and
b) a masterbatch comprising
   - one or more additives; and
   - a carrier comprising a C₃-C₅ alpha-olefin homo- or copolymer (B) wherein the amount of masterbatch is within the range of 0.2 to 15 wt.% based on the total amount of the polyolefin composition.

It has been surprisingly found that by using a C₃-C₅ alpha-olefin homo- or copolymer in the masterbatch, the masterbatch added, used in an amount within the range of 0.2 to 15 wt.% based on the total amount of the polyolefin composition, forms a second phase. This enables use of additives that are impaired of anything outside of the master batch, such as silanol condensation catalysts. Hence, albeit a second phase is formed the cross-linking performance of a silanol condensation catalyst is improved.

Furthermore, in case pigments are contained in the masterbatch two phases can be obtained whereby one phase is crosslinked and the other phase is coloured.

Unless otherwise stated to the contrary in the following the term "masterbatch" refers to the above masterbatch comprising
- one or more additives; and
- a carrier comprising a C₃-C₅ alpha-olefin homo- or copolymer (B).

In the present invention the term "carrier" denotes the entirety of polymeric compounds present in the masterbatch.

In case component (B) is a copolymer, the comonomer content is preferably at least 2.0 wt.%, more preferably at least 5.0 wt.% based on the total weight of component (B).

The comonomer content of component (B) in case being a copolymer is preferably not more than 25 wt.%, more preferably not more than 20 wt.% and most preferably not more than 15 wt.% based on the total weight of component (B).

The comonomer comprised in component (B) is preferably selected from C₂-C₈-alpha-olefins, more preferably from C₂-C₄-alpha-olefins and most preferably the comonomer is ethylene.

It will be understood that the term "comonomer" implies that the comonomer is different from the main monomer in the polymer. In this regard "main monomer" denotes that the monomer is present in an amount of more than 50 mol% based on the total amount of component (B). It is also possible that two or more comonomers are present in component (B). Usually not more than four comonomers are present in component (B), preferably not more than two comonomer are present in component (B) and most preferably not more than one comonomer is present in component (B).

Furthermore, component (B) may contain polar groups whereby the polar groups may be introduced into the polymer by copolymerisation or by grafting.

In the following preferred features in case the polar groups are introduced into the polymer by grafting are described.

As grafting agent, any such agent can be used which is known to be suitable for this purpose by the person skilled in the art.

Preferably, the grafting agent is an unsaturated carboxylic acid or a derivative thereof such as an anhydride, an ester and a salt (both metallic or non-metallic). Usually the grafting agent does not contain more than 20 carbon atoms.

Preferably, the unsaturated group is in conjugation with the carboxylic group. Hence, preferably, the grafting agent contains the structural element C=C-COO.

Examples of suitable grafting agents are acrylic acid, methacrylic acid, fumaric acid, maleic acid, nadic acid, citraconic acid, itaconic acid, crotonic acid, and their anhydrides, metal salts, esters amides or imides whereby maleic acid its derivatives such as maleic anhydride are preferred, and maleic anhydride is particularly preferred.

Grafting can be carried out by any process known in the art such as grafting in an melt without a solvent or in solution or dispersion or in a fluidised bed. Preferably, grafting is performed in a heated extruder or mixer as e.g. described in US 3,236,917, US 4,639,495, US 4,950,541 or US 5,194509. The content of these documents is herein included by reference. Preferably, grafting is carried out in a twin screw extruder such as described in US 4,950,541.

Grafting may be carried out in the presence or absence of a radical initiator but is preferably carried out in the presence of a radical initiator such as an organic peroxide, organic perester or organic hydroperoxide.

The amount of said grafting agent added to the polymer before grafting is preferably from 0.01 to 3.0 weight %, more preferably from 0.03 to 1.5 weight % of the polymer the grafting agent is applied on.

The carboxylic acid groups and/or carboxylic acid anhydride groups may alternatively be introduced into the polymer by copolymerisation. This is inter alia described in US 3 723 397.

Generally the same compounds used for grafting may also be used for copolymerisation.

Preferably, the comonomer used for copolymerisation is an unsaturated carboxylic acid or a derivative thereof such as an anhydride, an ester and a salt (both metallic or non-metallic). Usually the comonomer does not contain more than 20 carbon atoms.

Preferably, the unsaturated group is in conjugation with the carboxylic group. Hence, preferably, the comonomer contains the structural element C=C-COO.

Examples of suitable comonomers include acrylic acid, methacrylic acid, fumaric acid, maleic acid, nadic acid, citraconic acid, itaconic acid, crotonic acid, and their anhydrides, metal salts, esters amides or imides whereby maleic acid its derivatives such as maleic anhydride are preferred, and maleic anhydride is particularly preferred.

Polar groups in component (B) are particular advantageous in case the additive is a silanol condensation catalyst. Hence, in a preferred embodiment component (B) comprises polar groups and the additive comprised in the masterbatch is a silanol condensation catalyst.

Preferably component (B) is a propylene homo- or copolymer, more preferably a propylene copolymer according to any of the embodiments defined above and most preferably a propylene-ethylene-copolymer with an ethylene content as defined above.

In case component (B) is a propylene homo- or copolymer, preferably, the MFR (230°C, 2.16 kg, ISO 1133) is not more than 40 g/10 min, more preferably not more than 30 g/10 min.

Preferably, in case component (B) is a propylene homo- or copolymer, the MFR (230°C, 2.16 kg, ISO 1133) is at least 1.0 g/10 min, more preferably at least 3 g/10 min.

The melting point (Tₘ) of component (B) [Tₘ(B)] is usually similar compared with the melting point (Tₘ) of component (A) [Tₘ(A)]. Thereby admixing and processing of the polyethylene composition is facilitated. In this respect "similar" denotes that the melting points differ by not more than 60°C.

Preferably, |Tm(A) -Tm(B)| ≤ 50°*C* , more preferably |Tm(A) -Tm(B)| ≤ 40°*C* and most preferably |Tm(A) - Tm(B)| ≤ 30°*C*.

Generally, the melting point of component (B) is 110°C or more.

Preferable, the polyethylene composition according to the invention is obtainable by compounding the polyethylene with cross-linkable silicon-containing groups and the masterbatch, e.g. by dry-blending.

The amount of masterbatch is at least 0.2 wt.%, preferably at least 0.5 wt.% based on the total amount of the polyethylene composition.

The amount of masterbatch is not more than 15 wt.%, preferably not more than 10.0 wt.% and more preferably not more than 6.0 wt.% based on the total amount of the polyethylene composition.

The carrier is preferably present in an amount of at least 10 wt.% , more preferably at least 20 wt.% even more preferably at least 30 wt.% based on the total weight of the masterbatch.

The carrier is preferably present in an amount of not more than 98 wt.% more preferably not more than 95 wt.% based on the total weight of the masterbatch.

The carrier may also comprise two or more different C₃-C₅ alpha-olefin homo- or copolymers (B) according to the above embodiments of component (B). Hence, for example, the carrier may comprise
- a C₃-C₅ alpha-olefin homo- or copolymer containing polar groups; and
- a C₃-C₅ alpha-olefin homo- or copolymer not containing any polar groups
whereby both polymers are as defined for component (B) above.

Preferably, the entirety of polymers (B) according to any of the embodiments of the invention is at least 95 wt.% of the carrier, more preferably at least 98 wt.% of the carrier and most preferably the carrier consists of one or more polymers (B).

In a preferred embodiment the carrier only comprises one polymer according to the defintion of component (B), more preferably consists of one polymer according to the defintion of component (B), most preferably this polymer is free of polar groups.

The masterbatch preferably comprises additives in an amount of at least 2.0 wt.%, more preferably at least 10.0 wt.% and most preferably at least 35 wt.% based on the total weight of the masterbatch.

Preferably the amount of additives in the masterbatch is not more than 80 wt.% more preferably not more than 70 wt.% based on the total weight of the masterbatch.

Generally, the additive(s) comprised in the masterbatch may be selected from:
- pigments;
- silanol condensation catalysts;
- UV-stabilizers; and/or
- antioxidants.

Preferably, pigments and silanol condensation catalysts are not present in the same masterbatch. Hence, in case a pigment is present in the masterbatch, preferably no silanol condensation catalyst is present in the masterbatch.

In case in case a silanol condensation catalyst is present in the masterbatch, preferably no pigment is present in the masterbatch.

The polyethylene composition is preferably further comprising:
- a silanol condensation catalyst and/or a pigment,
more preferably, the silanol condensation catalyst or the pigment is the additive in the masterbatch comprising a C₃-C₅ alpha-olefin homo- or copolymer (B), more preferably the masterbatch comprises:
- a pigment or a silanol condensation catalyst; and
- optionally, UV-stabilizers and/or antioxidants.

It has been found that the cross-linking performance can be improved by adding the silanol condensation catalyst as masterbatch comprising a C₃-C₅ alpha-olefin homo- or copolymer (B) as described in the present invention. It has also been found that in case a pigment is present and the pigment is added as masterbatch comprising a C₃-C₅ alpha-olefin homo- or copolymer (B) as described in the present invention, the cross-linking performance using a silanol condensation catalyst is also improved. In the latter case the improvement already occurred in case the carrier polymer of the masterbatch comprising the silanol condensation catalyst was a polyethylene.

Hence, the polyethylene composition preferably comprises
a) a polyethylene having cross-linkable silicon-containing groups (A); and
b) a masterbatch comprising
   - a silanol condensation catalyst;
   and, optionally
c) a masterbatch comprising
   - a pigment;
whereby at least one of the masterbatches further comprises
- a carrier comprising a C₃-C₅ alpha-olefin homo- or copolymer (B) wherein the amount of the masterbatches is within the range of 0.2 to 15 wt.% based on the total amount of polyolefin composition.

One or both of the masterbatches may additionally comprise UV-stabilizers and/or antioxidants, preferably, UV-stabilizers and/or antioxidants are only comprised in either the pigment masterbatch or the silanol condensation catalyst masterbatch, more preferably in the masterbatch comprising the silanol condensation catalyst.

Thus, in a preferred embodiment, the masterbatch comprising the pigment is free of silanol condensation catalysts and the masterbatch comprising the silanol condensation catalyst is free of pigments.

In case more than one masterbatch is present, the total amount of masterbatches does not exceed the amount of masterbatch as given above.

Preferably, the silanol condensation catalyst is a sulphonic acid,
more preferably a sulphonic acid is an aromatic organic sulphonic acid comprising the structural element (II)

Ar(SO₃H)ₓ (II)

with Ar being an aryl group which may be substituted or non-substituted, and x being at least 1,
even more preferably, the sulphonic acid is selected from the following compounds
(i) an alkylated naphthalene monosulfonic acid substituted with 1 to 4 alkyl groups wherein each alkyl group is a linear or branched alkyl with 5 to 40 carbon atoms with each alkyl group being the same or different and wherein the total number of carbon atoms in the alkyl groups is in the range of 10 to 80 carbon atoms;
(ii) an arylalkyl sulfonic acid wherein the aryl group is phenyl or naphthyl and is substituted with 1 to 4 alkyl groups wherein each alkyl group is a linear or branched alkyl with 5 to 40 carbon atoms with each alkyl group being the same or different and wherein the total number of carbon atoms in the alkyl groups is in the range of 12 to 80;
(iii) an alkylated aryl disulfonic acid selected from the group consisting of the structure (III): 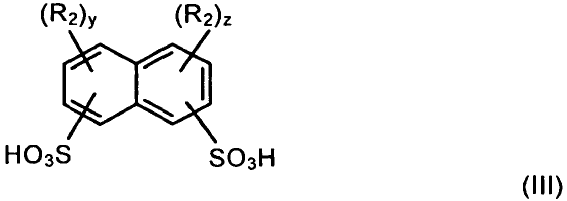 or the structure (IV): 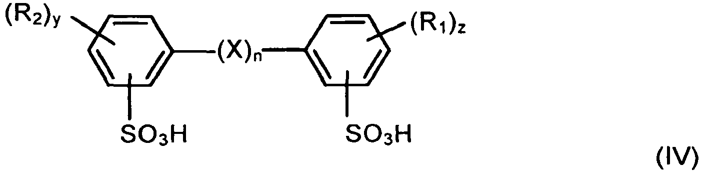 wherein each of R¹ and R² are the same or different and is a linear or branched alkyl group with 6 to 16 carbon atoms, y is 0 to 3, z is 0 to 3 with the proviso that y + z is 1 to 4, n is 0 to 3, X is a divalent moiety selected from the group consisting of -C(R³)(R⁴)-, wherein each of R³ and R⁴ is H or independently a linear or branched alkyl group of 1 to 4 carbon atoms and n is 1; - C(=O)-, wherein n is 1; -S-, wherein n is 1 to 3 and -S(O)₂-, wherein n is 1.

Even more preferably, the sulphonic acid is selected from compounds of group (ii) and most preferably, in the sulphonic acid of group (ii) the aryl group is phenyl and is substituted with 1 to 2 alkyl groups wherein each alkyl group is a linear or branched alkyl with 8 to 25 carbon atoms with each alkyl group being the same or different and wherein the total number of carbon atoms in the alkyl groups is in the range of 12 to 40.

In the present invention a "Lewis acid" denotes a molecular entity (and the corresponding chemical species ) that is an electron-pair acceptor and therefore able to react with a Lewis base to form a Lewis adduct, by sharing the electron pair furnished by the Lewis base.

In the present invention a "Brønsted acid" denotes a molecular entity capable of donating a hydron (proton) to a base, (i.e. a 'hydron donor') or the corresponding chemical species.

Preferably, the polyethylene composition according to the invention does not contain any acids besides Brønsted acids.

Hence, the polyethylene composition according to the invention is free of compounds which are Lewis acids but not simultaneously Brønsted acids.

The catalyst masterbatch may further comprise:
- silica and/or filler.

If present, the sum of silica and filler is preferably present in an amount of at least 0.5 wt.% based on the masterbatch, more preferably in an amount of at least 1.0 wt.% of the masterbatch.

The filler can be of any type of talc, mica, montmorillonite, wollastonite, bentonite, silica, halloysite, kaolinite and other phyllosilicates.

Preferably, the catalyst masterbatch comprises silica and more preferably, the catalyst masterbatch comprises silica but does not comprise a filler.

Preferably, the silica has a particle size below 20 micrometer and a specific surface area of more than 1 m²/g and less than 600 m²/g (BET).

If present, the sum of silica and filler is preferably not more than 20.0 wt.% based on the masterbatch, more preferably not more than 10.0 wt.% of the masterbatch and most preferred not more than 5 wt%.

Most pigments contain a dye responsible for the colour and an agent to make the pigmented composition more opaque, in the following denoted "opaque agent". The dye usually selectively reflects and absorbs certain wavelengths of visible light, i.e. within the range of 380 nanometers to 780 nm.

The opaque agent is usually selected from TiO₂ and/or CaCO₃, most preferred TiO₂. TiO₂ is also used to give the pigment brightness. CaCO₃ is often used in mixtures with titanium dioxide pigment much for cost reduction.

In case the polymer composition should be more opaque only, it is possible to use an opaque agent as pigment only.

Hence, the pigment preferably comprises or consists of an opaque agent.

In a preferred embodiment the pigment consists of the opaque agent. Preferably, the opaque agent is selected from titanium dioxide and/or CaCO₃ and most preferred the opaque agent is titanium dioxide.

It has been surprisingly found that the use of a C₃ to C₅ alpha-olefin homo- or copolymer as carrier for a masterbatch containing one or more pigments or one or more silanol condensation catalyst(s)) improves the cross-linking performance. Hence, a higher cross-linking degree with the same or even less amount of silanol condensation catalyst can be obtained under otherwise identical conditions (e.g. temperature/pressure).

In case the additive is a silanol condensation catalyst, the total amount of carrier is preferably at least 75 wt.% of the masterbatch, preferably at least 85 wt.% of the masterbatch.

In case the additive is a silanol condensation catalyst, the total amount of carrier is preferably not more than 98 wt.% more preferably not more than 95 wt.% based on the total weight of the masterbatch.

In case the additive is a pigment, the total amount of carrier is preferably not more than 80 wt.% of the masterbatch, preferably not more than 70 wt.% of the masterbatch.

In case the additive is a pigment, the total amount of carrier is preferably at least 20 wt.% even more preferably at least 30 wt.% based on the total weight of the masterbatch.

The composition of the present invention comprises a polyethylene having cross-linkable silicon-containing groups (A).

The cross-linkable silicon-containing groups may be introduced into the polyethylene by copolymerisation of ethylene monomers with comonomers having a silicon-containing group or by grafting, i.e. by chemical modification of the polymer by addition of a compound having a silicon-containing group mostly in a radical reaction. Both techniques are well known in the art.

The cross-linkable silicon-containing groups are preferably hydrolysable silane containing groups.

Preferably, the polyethylene having cross-linkable silicon-containing groups is obtained by copolymerisation. The copolymerisation is preferably carried out with a comonomer having a silicon-containing groups, the comonomer being represented by the formula

R¹SiR²_{q}Y_{3-q}

wherein
R¹ is an ethylenically unsaturated hydrocarbyl, hydrocarbyloxy or (meth)acryloxy hydrocarbyl group, preferably an ethylenically unsaturated hydrocarbyl group, more preferably an vinyl group
R² is a hydrocarbyl group, preferably a C₁ to C₂₀ hydrocarbyl group, more preferably a C₁ to C₁₀ hydrocarbyl group;
Y which may be the same or different, is a hydrolysable organic group, such as R³-O-, R³-(COO)-, (R³)ₓH₂₋ₓN- whereby x = 1 or 2 and R³ is a C₁ to C₂₀ hydrocarbyl group, more preferably a C₁ to C₁₀ hydrocarbyl group;
q is 0, 1 or 2.

In the present invention hydrocarbyl groups are univalent groups formed by removing a hydrogen atom from a hydrocarbon, e.g. ethyl, phenyl.

Special examples of the compound having a silicon-containing group are those wherein
R¹ is vinyl, allyl, isopropenyl, butenyl, cyclohexanyl or gamma-(meth)acryloxy propyl;
Y is methoxy, ethoxy, formyloxy, acetoxy, propionyloxy or an alkyl-or arylamino group; and
R², if present, is a methyl, ethyl, propyl, decyl or phenyl group.

A preferred compound having a silicon-containing group is represented by the formula

CH₂=CHSi(OA)₃

wherein A is a hydrocarbyl group having 1-8 carbon atoms, preferably 1-4 carbon atoms.

The most preferred compounds are vinyl-trimethoxysilane, vinyl-bismethoxyethoxysilane, vinyl-triethoxysilane, gamma-(meth)acryloxypropyltrimethoxysilane, gamma(meth)acryloxypropyltriethoxysilane, and vinyl triacetoxysilane.

The copolymerisation of ethylene and the compound having cross-linkable silicon-containing groups may be carried out under any suitable conditions resulting in the copolymerisation of the two monomers. Suitable methods are described in EP1 923 404.

Moreover, the copolymerisation of ethylene and the compound having cross-linkable silicon-containing groups may be implemented in the presence of one or more other comonomers which can be copolymerised with the two monomers. Such comonomers include (a) vinyl carboxylate esters, such as vinyl acetate and vinyl pivalate, (b) alpha-olefins, such as propene, 1-butene, 1-hexane, 1-octene and 4-methyl-1-pentene, (c) (meth)acrylates, such as methyl(meth)acrylate, ethyl(meth)acrylate and butyl(meth)acrylate, (d) olefinically unsaturated carboxylic acids, such as (meth)acrylic acid, maleic acid and fumaric acid, (e) (meth)acrylic acid derivatives, such as (meth)acrylonitrile and (meth)acrylic amide, (f) vinyl ethers, such as vinyl methyl ether and vinyl phenyl ether, and (g) aromatic vinyl compounds, such as styrene and alpha-ethyl styrene.

Amongst these comonomers, vinyl esters of monocarboxylic acids having 1-4 carbon atoms, such as vinyl acetate, and (meth)acrylate of alcohols having 1-4 carbon atoms, such as methyl(meth)acrylate, are preferred.

The term "(meth)acrylic acid" is intended to embrace both acrylic acid and methacrylic acid.

Especially preferred comonomers are butyl acrylate, ethyl acrylate and methyl acrylate.

Usually not more than two comonomers besides ethylene and the compound having cross-linkable silicon-containing groups are present in component (A), preferably not more than one comonomer besides ethylene and the compound having cross-linkable silicon-containing groups are present in component (A). In a preferred embodiment no further comonomer besides ethylene and the compound having cross-linkable silicon-containing groups are present in component (A).

If present, the content of comonomers different from the compound having cross-linkable silicon-containing groups may amount to 70 wt% of the component (A), preferably about 0.5 to 35 wt%, most preferably about 1 to 30 wt% of component (A).

If using a graft polymer, this may have been produced e.g. by any of the two methods described in US 3,646,155 and US 4,117,195, respectively.

Component (A) preferably contains 0.001 to 15 wt% of the compound having cross-linkable silicon-containing groups, more preferably 0.01 to 5 wt% of the compound having cross-linkable silicon-containing groups and most preferably 0.1 to 2 wt% of the compound having cross-linkable silicon-containing groups (A).

The present invention is further directed to a cross-linked polyethylene composition obtainable by treating the composition according the invention under cross-linking conditions.

The invention is furthermore, directed to the use of a masterbatch comprising
- an additive; and
- a carrier comprising a C₃-C₅ alpha-olefin homo- or copolymer (B)
for adding an additive to a polyethylene with cross-linkable silicon-containing groups (A), wherein the amount of masterbatch is within the range of 0.2 to 15 wt% based on the total amount of the polyolefin composition.

The invention is also directed to the use of C₃-C₅ alpha-olefin homo- or copolymer (B) as carrier for additive(s) to improve the performance of a silanol condensation catalyst when cross-linking a polyethylene composition further comprising
- a polyethylene with cross-linkable silicon-containing groups (A).

The present invention is particularly useful in case the additive is a pigment or a silanol condensation catalyst.

Thus the present invention is furthermore directed to the following:
Use of a pigment masterbatch comprising
   - a pigment; and
   - a carrier comprising a C₃-C₅ alpha-olefin homo- or copolymer (B)
   for pigmenting a polyethylene with cross-linkable silicon-containing groups (A), wherein the amount of masterbatch is within the range of 0.2 to 15 wt.% based on the total amount of the polyolefin composition.
Use of C₃-C₅ alpha-olefin homo- or copolymer (B) as carrier for pigment(s) to improve the performance of a silanol condensation catalyst when cross-linking a polyethylene composition further comprising
   - a polyethylene with cross-linkable silicon-containing groups (A).

The present invention will be further illustrated by the examples described below.

### Methods and Examples

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg (MFR₂) or 21.6 kg (MFR₂₁).

### Density

Low density polyethylene (LDPE): The density was measured according to ISO 1183-2. The sample preparation was executed according to ISO 1872-2 Table 3 Q (compression moulding).

Low pressure process polyethylene: Density of the polymer was measured according to ISO 1183 / 1872-2B.

### Hot set elongation test

Tape samples as prepared below in experimental part under "Tape sample preparation" were used to determine the hot set properties. Three dumb-bells sample, taken out along extrusion direction were prepared according to ISO527 5A from the 1.8 +/- 0.1 mm thick crosslinked tape. The hot set test were made according to EN60811-2-1 (hot set test) by measuring the thermal deformation.

Reference lines, were marked 20 mm apart on the dumb-bells. Each test sample was fixed vertically from upper end thereof in the oven and the load of 0.2 MPa are attached to the lower end of each test sample. After 15 min, 200°C in oven the distance between the pre-marked lines were measured and the percentage hot set elongation calculated, elongation %. For permanent set %, the tensile force (weight) was removed from the test samples and after recovered in 200°C for 5 minutes and then let to cool in room temperature to ambient temperature. The permanent set % was calculated from the distance between the marked lines. The average of the three tests were reported.

### Content (mol-%) of hydrolysable silane group(s) using X-ray fluorescence analysis:

The pellet sample was pressed to a 3 mm thick plaque (150°C for 2 minutes, under pressure of 5 bar and cooled to room temperature). Si-atom content was analysed by wavelength dispersive XRF (AXS S4 Pioneer Sequential X-ray Spectrometer supplied by Bruker). The pellet sample was pressed to a 3 mm thick plaque (150°C for 2 minutes, under pressure of 5 bar and cooled to room temperature).

Generally, in XRF- method, the sample is irradiated by electromagnetic waves with wavelengths 0.01-10 nm. The elements present in the sample will then emit fluorescent X-ray radiation with discrete energies that are characteristic for each element. By measuring the intensities of the emitted energies, quantitative analysis can be performed. The quantitative methods are calibrated with compounds with known concentrations of the element of interest e.g. prepared in a Brabender compounder.

The XRF results show the total content (wt%) of Si and are then calculated as wt% of cross-linkable silicon-containing groups, e.g. R¹SiR²_{q}Y_{3-q}.

### Melting point (Tₘ)

The melting temperature (Tₘ) of the olefin copolymer was determined according to ASTM D 3418. Tₘ was measured with a Mettler TA 820 differential scanning calorimetry (DSC) apparatus on 3 ± 0.5 mg samples. Melting curves were obtained during 10 °C/min cooling and heating scans between -10 to 200 °C. Melting temperatures were taken as the peak of endotherms and exotherms.

### Content of the polar and alpha-olefin comonomer

Comonomer content (wt.%) of the polar comonomer was determined in a known manner based on Fourier transform infrared spectroscopy (FTIR) determination calibrated with ¹³C-NMR as described in Haslam J, Willis HA, Squirrel DC. Identification and analysis of plastics, 2nd ed. London lliffe books; 1972. FTIR instrument was a Perkin Elmer 2000, 1scann, resolution 4cm⁻¹ .The peak for the used comonomer was compared to the peak of polyethylene as evident for a skilled person (e.g. the peak for butyl acrylate at 3450 cm⁻¹ was compared to the peak of polyethylene at 2020 cm⁻¹). The wt.% was converted to mol% by calculation, based on the total moles of polymerisable monomers.

An alternative method to determine polar as well as the alpha-olefin comonomer content is to use NMR-method which would give equal results to above X-ray and FTIR method, i.e results would be comparable to purposes of the invention:
The comonomer content was determined by using ¹³C -NMR. The ¹³C-NMR spectra were recorded on Bruker 400 MHz spectrometer at 130 °C from samples dissolved in 1,2,4-trichlorobenzene/benzene-d6 (90/10 w/w). ( Ola 27/3 2012)

### EXAMPLES

### Components used

### EVS

ethylene-vinyl-trimethoxy silane-copolymer produced in a high-pressure tubular reaction process, having a VTMS content of 1.35 wt.% an MFR2 (ISO 1133, 190 °C, 2.16 kg) of 1.0 g/10 min and a density of 923 kg/m³. Silanol condensation catalyst masterbatch (CMB)

Silanol condensation catalyst masterbatch containing 1.5 wt. % dodecylbenzene sulphonic acid and 98.5 wt.% ethylene-butyl acrylate-copolymer produced in a high-pressure tubular process having a butyl acrylate content of 17 wt.%, an MFR₂ (ISO 1133, 190 °C, 2.16 kg) of 7.0 g/10 min and a density of 924 kg/m³.

### Polyone 2000-WT-50

A white colorant commercial available under trade name Polyone 2000-WT-50, (supplied by PolyOne Sweden AB) containing upto 60 wt.% titanium dioxide and LDPE as carrier. It contains pigment and additives that is known to impair the sulphonic acids as condensation catalyst.

PP-MB1 sold by Polyone under the name of PP86007:
A masterbatch containing
   - 40 wt.% propylene homopolymer
   - 60 wt.% titanium dioxide (rutile)
PP-MB2 sold by Polyone under the name of PP86014

A masterbatch containing
- 40 wt.% propylene homopolymer
- 60 wt.% titanium dioxide (rutile)

| | |
|---|---|
| Stearic acid | Palmera B 1800, obtained from Avokal GmbH |
| HDTMS | hexadecyl trimethoxy silane |
| Silica | Perkasil 408 PD, a precipitated silica with a high surface area and a fine particle size. obtained from Grace Davison, W. R. Grace & Co.-Conn. |

G3003: maleic anhydride grafted polypropylene obtained from Eastman

### TD109CF:

propylene alpha olefin copolymer with an MFR (ISO 1133, 230°C, 2.16 kg) of 6.0 g/10 min. Said polymer is commercially available from Borealis AG.

### RF365MO:

polypropylene with an MFR (ISO 1133, 230°C, 2.16 kg) of 20.0 g/10 min. Said polymer is commercially available from Borealis AG.

### EBA 17%

Ethylene-butyl acrylate-copolymer produced in a high-pressure tubular process having a butyl acrylate content of 17 wt.%, an MFR₂ (ISO 1133, 190 °C, 2.16 kg) of 7.0 g/10 min and a density of 924 kg/m³.

### Compounding of the masterbatches

The catalysts masterbatches were compounded using a BUSS AG co-kneader type PR46B-11D/H1 (50mm screw) and pellitized.

### Compounding of the compositions

EVS pellets, CMB pellets and colour MB pellets were dry blended.The blend was feed into a hopper. Tape samples having the contents as described in table 2 were prepared by meltmixing in a tape extruder (Collin Teach-Line Extruder, Type: E 20 T SCD 15 having the following settings.

| Set Values Temperature [°C] | | | | | | Extruder | |
|---|---|---|---|---|---|---|---|
| Zone | | | | | | Speed | Output |
| 1 | 2 | 3 | 4 | 5 | 6 | [rpm] | [kg/h] |
| 60 | 150 | 160 | 170 | 170 | 170 | 30 | 0.8 |

The obtained tape samples (with 1.8 +/- 0.1 mm in thickness) were used for crosslinking and for determining gel content and hot set elongation.

Crosslinking of inventive compositions was effected in two different conditions: either the obtained tape sample was kept in water bath at 90 °C or in ambient conditions, at 23 °C and 50% relative humidity, and let crosslinking to occur for different time periods as specified in table 2 below. Accordingly, hot set elongation was measured after crosslinking 24 h in water bath at 90 °C and after 7 days and 14 days in ambient conditions at 23 °C.

| Table 2 | | RE1 | RE2 | RE3 | IE4 | IE5 | IE6 | IE7 |
|---|---|---|---|---|---|---|---|---|
| CMB | [wt.%] | 5 | 5 | 10 | 5 | 10 | 5 | 10 |
| EVS | [wt.%] | 95 | 94 | 89 | 94 | 89 | 94 | 89 |
| Polyone 2000-WT 50 | [wt.%] | | 1 | 1 | | | | |
| PP-MB1 | [wt.%] | | | | 1 | 1 | | |
| PP-MB2 | [wt.%] | | | | | | 1 | 1 |
| Hot set elongation | | | | | | | | |
| Water 24 h/90 °C | | 34 | breaks | Breaks | 233 | 61 | 158 | 52 |
| 7 days/ambient conditions at 23 °C. | | 56 | breaks | Breaks | 84 | 67 | 82 | 67 |
| 14 days/ambient conditions at 23 °C. | | 40 | N/A | N/A | 57 | 62 | 75 | 62 |

| | | | | | | | | |
|---|---|---|---|---|---|---|---|---|
| RE = reference example, IE = inventive example | | | | | | | | |

### Compounding of the catalyst masterbatches (inventive and comparative examples)

The catalysts masterbatches were compounded as described above with the concentrations shown in table 3 below.

| Table 3 | **RE8** | **RE9** | **IE10** | **IE11** | **IE12** | **IE13** |
|---|---|---|---|---|---|---|
| G3003 | | | 25.5 | 23.5 | | |
| EBA 17% | 95.6 | 92 | 69.5 | 67.5 | | |
| TD109CF | | | | | 96 | |
| RF365MO | | | | | | 92.5 |
| DDBSA | 3.4 | 3 | 3 | 3 | 3 | 2.5 |
| stearic acid | | 4 | | 4 | | 6 |
| HDTMS | 1 | 1 | 1 | 1 | 1 | 1 |
| Perkasil 408 pd | | | 1 | 1 | | |

| | | | | | | |
|---|---|---|---|---|---|---|
| RE reference example; IE inventive example | | | | | | |

### Compounding of the compositions

Tape samples containing 94 parts per weight of EVS, 5 parts per weight of the respective masterbatch and 1 part by weight of Polyone 2000-WT-50 were prepared by meltmixing in a tape extruder (Collin Teach-Line Extruder, Type: E 20 T SCD 15 having the following settings.

| Set Values Temperature [°C] | | | | | | Extruder | |
|---|---|---|---|---|---|---|---|
| Zone | | | | | | Speed | Output |
| 1 | 2 | 3 | 4 | 5 | 6 | [rpm] | [kg/h] |
| 60 | 150 | 160 | 170 | 170 | 170 | 30 | 0.8 |

The obtained tape samples (with 1.8 +/- 0.1 mm in thickness) were used for crosslinking and for determining gel content and hot set elongation.

Crosslinking of inventive compositions was effected by keeping the obtained tape sample in ambient conditions, at 23 °C and 50% relative humidity, and let crosslinking to occur for 7 days.

| | **RE8** | **RE9** | **IE10** | **IE11** | **IE12** | **IE13** |
|---|---|---|---|---|---|---|
| Hot set Elongation | Break | 160 | 90 | 47 | 132 | 63 |

## Claims

1. A polyethylene composition comprising:
a) a polyethylene having cross-linkable silicon-containing groups (A); and
b) a masterbatch comprising
- one or more additives; and
- a carrier comprising a C₃-C₅ alpha-olefin homo or copolymer (B) wherein the amount of masterbatch is within the range of 0.2 to 15 wt.% based on the total amount of the polyolefin composition.

2. The polyethylene composition according to claim 1 wherein the polyethylene composition is obtainable by compounding the polyolefin with cross-linkable silicon-containing groups and the masterbatch.

3. The polyethylene composition according to any one of the preceding claims, wherein the amount of component (B) is 20 to 98 wt.% based on the total amount of the masterbatch.

4. The polyethylene composition according to any one of the preceding claims further comprising:
- a silanol condensation catalyst and/or a pigment.

5. The polyethylene composition according to claim 4, wherein the silanol condensation catalyst or the pigment is the additive in the masterbatch comprising a C3-C5 alpha-olefin homo- or copolymer (B).

6. The polyethylene composition according to any one of the preceding claims 4 or 5, wherein the silanol condensation catalyst is a sulphonic acid.

7. The polyethylene composition according to claim 6, wherein the sulphonic acid is an aromatic organic sulphonic acid comprising the structural element (II)
Ar(SO₃H)ₓ (II)
with Ar being an aryl group which may be substituted or non-substituted, and x being at least 1.

8. The polyethylene composition according to claim 7, wherein the sulphonic acid is selected from the following compounds:
(i) an alkylated naphthalene monosulfonic acid substituted with 1 to 4 alkyl groups wherein each alkyl group is a linear or branched alkyl with 5 to 40 carbon atoms with each alkyl group being the same or different and wherein the total number of carbon atoms in the alkyl groups is in the range of 10 to 80 carbon atoms;
(ii) an arylalkyl sulfonic acid wherein the aryl group is phenyl or naphthyl and is substituted with 1 to 4 alkyl groups wherein each alkyl group is a linear or branched alkyl with 5 to 40 carbon atoms with each alkyl group being the same or different and wherein the total number of carbon atoms in the alkyl groups is in the range of 12 to 80;
(iii) an alkylated aryl disulfonic acid selected from the group consisting of the structure (III): 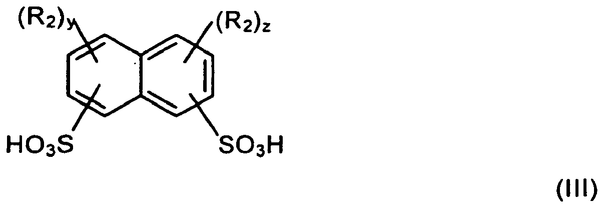 or the structure (IV): 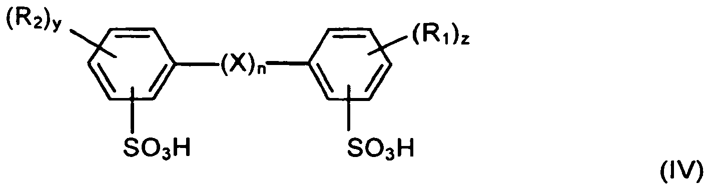 wherein each of R¹ and R² are the same or different and is a linear or branched alkyl group with 6 to 16 carbon atoms, y is 0 to 3, z is 0 to 3 with the proviso that y + z is 1 to 4, n is 0 to 3, X is a divalent moiety selected from the group consisting of -C(R³)(R⁴)-, wherein each of R³ and R⁴ is H or independently a linear or branched alkyl group of 1 to 4 carbon atoms and n is 1; -C(=O)-, wherein n is 1; -S-, wherein n is 1 to 3 and-S(O)₂-, wherein n is 1.

9. The polyethylene composition according to claim 8, wherein the sulphonic acid is selected from compounds of group (ii).

10. The polyethylene composition according to claim 9, wherein in the sulphonic acid of group (ii) the aryl group is phenyl and is substituted with 1 to 2 alkyl groups wherein each alkyl group is a linear or branched alkyl with 8 to 25 carbon atoms with each alkyl group being the same or different and wherein the total number of carbon atoms in the alkyl groups is in the range of 12 to 40.

11. The polyethylene composition according to any one of the preceding claims, which does not contain any acids besides Brønsted acids.

12. A cross-linked polyethylene composition obtainable by treating the composition according to any one of the preceding claims under cross-linking conditions.

13. Use of a masterbatch comprising
- an additive; and
- a carrier comprising a C₃-C₅ alpha-olefin homo- or copolymer (B)
for adding an additive to a polyethylene with cross-linkable silicon-containing groups
wherein the amount of masterbatch is within the range of 0.2 to 15 wt.% based on the total amount of the polyolefin composition.

14. Use of C₃-C₅ alpha-olefin homo- or copolymer (B)as carrier for additive(s) to improve the performance of a silanol condensation catalyst when cross-linking a polyethylene composition further comprising
- a polyethylene with cross-linkable silicon-containing groups.

## Patentansprüche

1. Eine Polyethylenzusammensetzung, welche umfasst:
a) ein Polyethylen, welches quervernetzbare siliziumhaltige Gruppen (A) hat; und
b) einen Masterbatch, welcher umfasst:
- ein oder mehr Additive; und
- einen Träger, der ein C₃-C₅ alpha-Olefinhomo- oder -kopolymer (B) umfasst
worin die Menge von Masterbatch innerhalb des Bereichs von 0,2 bis 15 Gew.-% in Bezug auf die Gesamtmenge von der Polyolefinzusammensetzung ist.

2. Polyethylenzusammensetzung gemäß Anspruch 1, worin die Polyethylenzusammensetzung erhältlich ist durch Compounding des Polyolefins mit quervernetzbaren siliziumhaltigen Gruppen und dem Masterbatch.

3. Polyethylenzusammensetzung gemäß einem der vorangehenden Ansprüche, worin die Menge von Bestandteil (B) 20 bis 98 Gew.-% in Bezug auf die Gesamtmenge des Masterbatches ist.

4. Polyethylenzusammensetzung gemäß einem der vorangehenden Ansprüche, weiterhin umfassend:
- einen Silanolkondensationskatalysator und/oder ein Pigment.

5. Polyethylenzusammensetzung gemäß Anspruch 4, worin der Silanolkondensationskatalysator oder das Pigment das Additiv in dem Masterbatch ist, welcher ein C₃-C₅ alpha-Olefinhomo- oder -kopolymer (B) umfasst.

6. Polyethylenzusammensetzung gemäß einem der vorangehenden Ansprüche 4 oder 5, worin der Silanolkondensationskatalysator eine Sulfonsäure ist.

7. Polyethylenzusammensetzung gemäß Anspruch 6, worin die Sulfonsäure eine aromatische organische Sulfonsäure ist, welche das Strukturelement (II)
Ar(SO₃H)ₓ (II)
umfasst, wobei Ar eine Arylgruppe ist, welche substituiert oder unsubstituiert sein kann, und x mindestens 1 ist.

8. Polyethylenzusammensetzung gemäß Anspruch 7, worin die Sulfonsäure ausgewählt wird aus den folgenden Verbindungen:
(i) eine alkylierte Naphthalenmonosulfonsäure, welche mit 1 bis 4 Alkylgruppen substituiert ist, worin jede Alkylgruppe ein lineares oder verzweigtes Alkyl mit 5 bis 40 Kohlenstoffatomen ist, wobei jede Alkylgruppe die gleiche oder unterschiedlich ist und worin die Gesamtzahl von Kohlenstoffatomen in den Alkylgruppen im Bereich von 10 bis 80 Kohlenstoffatomen ist
(ii) eine Arylalkylsulfonsäure, worin die Arylgruppe Phenyl oder Naphthyl ist und welche mit 1 bis 4 Alkylgruppen substituiert ist, worin jede Alkylgruppe ein lineares oder verzweigtes Alkyl mit 5 bis 40 Kohlenstoffatomen ist, wobei jede Alkylgruppe die gleiche oder unterschiedlich ist und worin die Gesamtanzahl von Kohlenstoffatomen in den Alkylgruppen im Bereich von 12 bis 80 ist;
(iii) eine alkylierte Aryldisulfonsäure ausgewählt aus der Gruppe bestehend aus der Struktur (III): 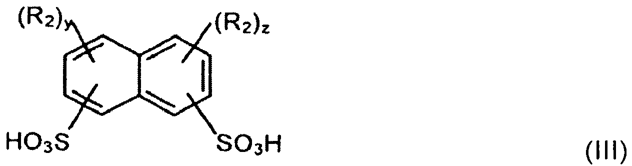 oder der Struktur (IV) 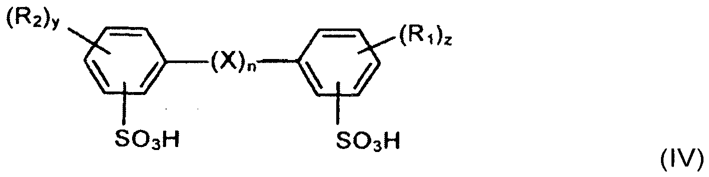 worin jedes von R¹ und R² das gleiche oder unterschiedlich sind und eine lineare oder verzweigte Alkylgruppe mit 6 bis 16 Kohlenstoffatomen ist, wobei y 0 bis 3 ist, z 0 bis 3 ist mit der Voraussetzung, dass y + z 1 bis 4 ist, n 0 bis 3 ist, X eine bivalente Einheit ausgewählt aus der Gruppe bestehend aus -C(R³)(R⁴)-, worin jedes von R³ und R⁴ H oder unabhängig eine lineare oder verzweigte Alkylgruppe von 1 bis 4 Kohlenstoffatomen ist und n 1 ist; -C(=O)-, worin n 1 ist; -S-, worin n 1 bis 3 ist und -S(O)₂-, worin n 1 ist.

9. Polyethylenzusammensetzung gemäß Anspruch 8, worin die Sulfonsäure ausgewählt wird aus Verbindungen der Gruppe (ii).

10. Polyethylenzusammensetzung gemäß Anspruch 9, worin in der Sulfonsäure von Gruppe (ii) die Arylgruppe Phenyl ist und mit 1 bis 2 Alkylgruppen substituiert ist, worin jede Alkylgruppe ein lineares oder verzweigtes Alkyl mit 8 bis 25 Kohlenstoffatomen ist, wobei jede Alkylgruppe die gleiche oder unterschiedlich ist und worin die Gesamtanzahl von Kohlenstoffatomen in den Alkylgruppen im Bereich von 12 bis 40 ist.

11. Polyethylenzusammensetzung gemäß einem der vorangehenden Ansprüche, welche keine Säuren neben Brönstedsäuren enthält.

12. Polyethylenzusammensetzung erhältlich durch Behandeln der Zusammensetzung gemäß einem der vorangehenden Ansprüche unter quervernetzenden Bedingungen.

13. Verwendung eines Masterbatches, welcher umfasst
- ein Additiv; und
- einen Träger, der ein C₃-C₅ alpha-Olefinhomo- oder -kopolymer (B) umfasst
zum Hinzufügen eines Additives zu einem Polyethylen mit quervernetzbaren siliziumhaltigen Gruppen
worin die Menge des Masterbatches innerhalb des Bereichs von 0,2 bis 15 Gew.-% in Bezug auf die Gesamtmenge der Polyolefinzusammensetzung ist.

14. Verwendung eines C₃-C₅ alpha Olefinhomo- oder -kopolymers (B), als Träger für Additv(e) zum Verbessern der Leistung eines Silanolkondensationskatalysators beim Quervernetzen einer Polyethylenzusammensetzung, welche weiterhin umfasst
- ein Polyethylen mit quervernetzbaren siliziumhaltigen Gruppen.

## Revendications

1. Composition de polyéthylène comprenant :
a) un polyéthylène ayant des groupes siliconés réticulables (A) ; et
b) un mélange maître comprenant
- un ou plusieurs additifs ; et
- un support comprenant un homo- ou co-polymère d'α-oléfine en C₃ à C₅ (B) ;
dans laquelle la quantité de mélange maître est située dans la plage allant de 0,2 à 15 % en poids par rapport à la quantité totale de la composition de polyoléfine.

2. Composition de polyéthylène selon la revendication 1, laquelle composition de polyéthylène peut être obtenue par combinaison de la polyoléfine ayant des groupes siliconés réticulables et du mélange maître.

3. Composition de polyéthylène selon l'une quelconque des revendications précédentes, dans laquelle la quantité de composant (B) est de 20 à 98 % en poids par rapport à la quantité totale du mélange maître.

4. Composition de polyéthylène selon l'une quelconque des revendications précédentes, comprenant en outre :
un catalyseur de condensation de silanol et/ou un pigment.

5. Composition de polyéthylène selon la revendication 4, dans laquelle le catalyseur de condensation de silanol ou le pigment est l'additif dans le mélange maître comprenant un homo- ou co-polymère d'α-oléfine en C₃ à C₅ (B).

6. Composition de polyéthylène selon l'une ou l'autre des revendications 4 et 5, dans laquelle le catalyseur de condensation de silanol est un acide sulfonique.

7. Composition de polyéthylène selon la revendication 6, dans laquelle l'acide sulfonique est un acide sulfonique organique aromatique comprenant l'élément structurel (II)
Ar(SO₃H)ₓ (II)
où Ar est un groupe aryle qui peut être substitué ou non substitué, et x vaut au moins 1.

8. Composition de polyéthylène selon la revendication 7, dans laquelle l'acide sulfonique est choisi parmi les composés suivants :
(i) un acide naphtalènemonosulfonique alkylé substitué par 1 à 4 groupes alkyle, chaque groupe alkyle étant un alkyle linéaire ou ramifié ayant 5 à 40 atomes de carbone, chaque groupe alkyle étant identique ou différent, et le nombre total d'atomes de carbone dans les groupes alkyle étant situé dans la plage allant de 10 à 80 atomes de carbone ;
(ii) un acide arylalkylsulfonique dont le groupe aryle est phényle ou naphtyle et qui est substitué par 1 à 4 groupes alkyle, chaque groupe alkyle étant un alkyle linéaire ou ramifié ayant 5 à 40 atomes de carbone, chaque groupe alkyle étant identique ou différent, et le nombre total d'atomes de carbone dans les groupes alkyle étant situé dans la plage allant de 12 à 80;
(iii) un acide aryldisulfonique alkylé choisi dans l'ensemble constitué par la structure (III) : 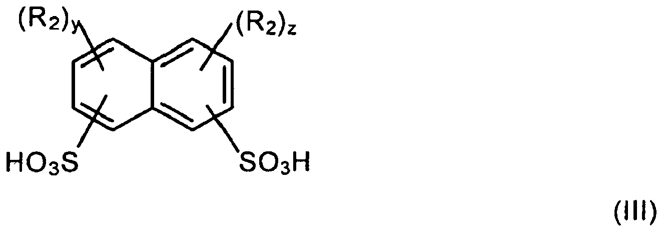 et la structure (IV) : 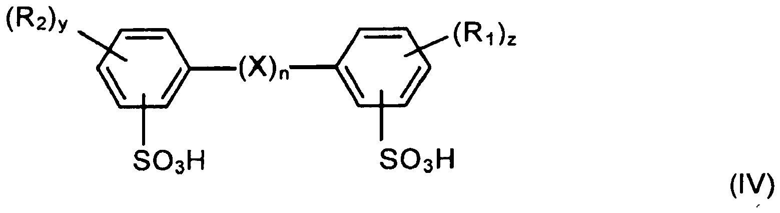 dans lesquelles chacun de R¹ et R², qui sont identiques ou différents, est un groupe alkyle linéaire ou ramifié ayant 6 à 16 atomes de carbone, y vaut de 0 à 3, z vaut de 0 à 3, sous réserve que y + z vaille de 1 à 4, n vaut de 0 à 3, X est un fragment divalent choisi dans l'ensemble constitué par -C(R³)(R⁴)- où chacun de R³ et R⁴ est H ou indépendamment un groupe alkyle linéaire ou ramifié ayant 1 à 4 atomes de carbone et n vaut 1 ; -C(=O)- où n vaut 1 ; -S- où n vaut de 1 à 3 et -S(O)₂- où n vaut 1.

9. Composition de polyéthylène selon la revendication 8, dans laquelle l'acide sulfonique est choisi parmi les composés du groupe (ii).

10. Composition de polyéthylène selon la revendication 9, dans laquelle, dans l'acide sulfonique du groupe (ii), le groupe aryle est phényle et est substitué par 1 à 2 groupes alkyle, chaque groupe alkyle étant un alkyle linéaire ou ramifié ayant de 8 à 25 atomes de carbone, chaque groupe alkyle étant identique ou différent, et le nombre total d'atomes de carbone dans les groupes alkyle étant situé dans la plage allant de 12 à 40.

11. Composition de polyéthylène selon l'une quelconque des revendications précédentes, qui ne contient aucun acide à part des acides de Bronsted.

12. Composition de polyéthylène réticulé pouvant être obtenue par traitement de la composition selon l'une quelconque des revendications précédentes dans des conditions de réticulation.

13. Utilisation d'un mélange maître comprenant
- un additif ; et
- un support comprenant un homo- ou co-polymère d'α-oléfine en C₃ à C₅ (B) pour l'addition d'un additif à un polyéthylène ayant des groupes siliconés réticulables, dans laquelle la quantité de mélange maître est située dans la plage allant de 0,2 à 15 % en poids par rapport à la quantité totale de la composition de polyoléfine.

14. Utilisation d'un homo- ou co-polymère d'α-oléfine en C₃ à C₅ (B) en tant que support pour un ou plusieurs additifs afin d'améliorer la performance d'un catalyseur de condensation de silanol lors de la réticulation d'une composition de polyéthylène comprenant en outre
- un polyéthylène ayant des groupes siliconés réticulables.
